# EUROPEAN PATENT SPECIFICATION

(11) **EP 3 557 720 B1**
(45) Date of publication and mention of the grant of the patent: **11.08.2021**
(21) Application number: 19154982.3
(22) Date of filing: 01.02.2019
(51) Int. Cl.: H02J 7/02, H02J 50/12, H01F 27/28, H01F 38/14

(54) **METHOD AND SYSTEM FOR WIRELESS CHARGING OF ELECTRICAL ENERGY STORAGE IN A FIXED OR MOBILE CONSUMER**
VERFAHREN UND SYSTEM ZUM DRAHTLOSEN LADEN EINES ELEKTRISCHEN ENERGIESPEICHERS IN EINEM FESTEN ODER MOBILEN VERBRAUCHER
PROCÉDÉ ET DISPOSITIF DE CHARGE SANS FIL DE STOCKAGE D'ÉNERGIE ÉLECTRIQUE CHEZ UN CONSOMMATEUR MOBILE OU FIXE

(30) Priority: 16.04.2018 RU 2018113768
(43) Date of publication of application: 23.10.2019
(73) Proprietor: Folquer Holdings Limited, 2015, Nicosia (CY)
(72) Inventor: Trubnikov, Oleg Vladimirovich, 129110 Moskva (RU); Trubnikov, Vladimir Zakharovich, 129110 Moskva (RU); Tarasov, Andrej Borisovich, 119192 Moskva (RU)
(74) Representative: Sezgin, Hatice Özlem

(56) References cited:
- WO-A1-2016/114637
- US-A1- 2013 099 583
- US-B2- 6 960 968

## Description

### FIELD OF INVENTION

The present invention relates to an electrical engineering, particularly to methods and systems for wirelessly transmitting electrical energy between stationary devices, in particular between stationary power supply units and mobile devices consuming electrical energy, by using resonant half-wave technologies.

### BACKGROUND

Methods and devices for wirelessly transmitting electrical energy from a stationary power-supply source to a stationary or mobile energy-consuming device are classified as closely and loosely coupled objects. Closely coupled methods and systems provide minimum energy losses. A disadvantage of the closely coupled systems for wirelessly transmitting energy is in that a power transmission apparatus and a power reception apparatus are required to be precisely positioned with regard to each other. In the closely coupled systems, a coupling factor is required to be brought up to about 100%.

Even if the coupling factor is less than 10%, loosely coupled methods and systems can provide efficiency of 0.8 or more with significantly lower requirements for the relative positioning of the power transmission apparatus and power reception apparatus, in particular due to resonant properties of the power transmission apparatus and power reception apparatus. An electromotive force can be excited both in the loosely and closely coupled power transmission apparatuses and power reception apparatuses, mainly due to variables of electrical or magnetic fields. Transmission systems are also classified as resonant and non-resonant.

There are a known method and device for transmitting electrical energy (Russian patent No. 2411142 dated 10.02.2011, Bulletin No. 4) to electrical vehicles, cell phones and other electronic devices transmitting electrical energy from a resonant power supply system via a high voltage, high frequency transducer at a resonant frequency of fo, a single-wire line and an air gap to individual current collectors of an energy-consuming device; electrical energy is transmitted by using an electric induction method at a frequency in the range of 0.1-1000 kHz at a line voltage of 0.1-1000 kV through an air gap between two conducting wires shielded on an outer side with air capacitor plates; wherein one of the plates is radiating and connected to shielded and insulated single-wire line; a capacity of the insulated shield of a single-wire line is compensated at a resonant frequency of f₀ with an inductance by the connection of the inductance to the shield and a ground; the receiving plate receives energy and is integrated into a current collector of the energy-consuming device and connected to an electrical load via a oscillating circuit, a rectifier and a charger.

A disadvantage of the known method of RU 2411142 is in that a high potential (up to 1000 kV) on a power transmission apparatus and power reception apparatus is required to be used.

A contactless method of supplying power to electrical vehicles (Russian patent No. 2505427 dated 10.07.2013. Bulletin No. 19) allows solving the problem of contactless power transmission to stationary or mobile power reception apparatuses. According to the above patent, the known method of supplying power to electrical vehicles comprises: supplying power from a high frequency current source to a transmission system located on a road surface and receiving the supplied power by an electrical equipment of the electrical vehicles; wherein an electrical energy from an electrical network is converted for a frequency and a voltage, and current and voltage resonant oscillations are created in the transmitting power supply system at a natural resonance frequency of an electrical circuit in the electrical vehicle. Meanwhile, the electrical energy is supplied in a resonant mode via a high-frequency feeder to a transmission coil. The transmission (supply) coil is located on a road surface and formed as a flat rectangular single-layer coil of insulated wire, with displacement of each coil turn by a coil wire diameter. An electromagnetic field is generated in both parts of the transmission coil when an alternating high frequency current passes through them; an electromagnetic energy density vector is oriented and directed on a top of the transmission coil, and the receiving coils in the form of spiral coils are located on the electrical vehicle along a circumference the rubber wheels while moving along or standing still on the road surface. The electrical vehicle shall be also equipped with a rectangular receiving coil located on and secured to an electrically insulated plate which in turn is secured to a bottom of a vehicle body and located parallel to a road bed with an air gap above both parts of the transmission coil. The coils on the electrical vehicle receive electromagnetic energy which is supplied to an energy storage device via a rectifier.

Other methods and systems for wireless charging an energy storage device are disclosed in WO 2016/114637 A1 (published on 21 July, 2016) and US 2013/099583 (published on 25 April, 2013).

A disadvantage of the known contactless method of supplying power to electrical vehicles is the high irregularity of a magnetic induction flux in a transversal direction in relation to the conductors, thereby toughening requirements for accuracy of the power reception apparatus positioning transversally to the coil conductors.

An object of the present invention is to create a method and a system for wireless charging an energy storage device which has a uniform intensity of magnetic flux at an active area of a power transmission apparatus, a high efficiency with regard to energy transmission, and a low radiation level.

### SUMMARY

A technical effect provided by the present invention is allowed wireless charging of an energy storage device, in particular an energy storage device of a stationary or mobile energy-consuming device, i.e. charging and recharging energy storage devices in vehicles during movement or at special wireless charging stations, when a mobile energy-consuming device is present at a road crossing with traffic lights, etc., charging and recharging energy storage devices in mobile phones, laptops, tablet PCs in large rooms, charging and recharging energy storage devices in quadcopters, automated logistical systems of cargo movement in large warehouses and bases and storage devices under operating conditions of automatic systems where presence of people is undesirable (warehouses with very low operating temperatures, warehouses with special composition of ambient environment, etc.).

A further technical effect provided by the present invention is improved efficiency of wireless energy transmission since an electromagnetic field at a periphery of the resonant coil of the energy transmission apparatus effectively takes part in wireless energy transmission as resulted from a magnetic field which does not decrease in the resonant coil of the power transmission apparatus toward to the periphery.

In one aspect of the present invention, there is provided a method for wireless charging an energy storage device, including: transmitting electrical energy from a power source to a power reception apparatus by using a power transmission apparatus magnetic-resonance coupled to the power reception apparatus and connected to the power source via a frequency-adjustable current converter intended to convert an electrical current from the power source to a high frequency AC current in a resonant coil of the power transmission apparatus, thereby generating a high frequency electrical current in a resonant coil of the power reception apparatus; and converting, by means of a current converter connected to the energy storage device, the generated high frequency electrical current to electrical current required to provide operation of the energy storage device; wherein the frequency adjustable current converter is set for a frequency of a quarter-wavelength resonance of the resonant coil of the power transmission apparatus; wherein the resonant coil of the power transmission apparatus is an open-ended line formed of a pair of insulated wires coiled into a double-wire flat spiral.

In an embodiment of the method for wireless charging an energy storage device, the resonant coil the power reception apparatus is formed of a pair of insulated wires coiled into a double-wire flat spiral; a natural resonance frequency of the double-wire flat spiral coil of the power reception apparatus is equal to a resonant frequency of the double-wire flat spiral coil of the power transmission apparatus.

In one embodiment of the method for wireless charging an energy storage device, peripheral leads of the double-wire flat spiral coil of the power transmission apparatus are short-circuited, and the electrical energy from the frequency-adjustable current converter is supplied to the double-wire flat spiral coil of the power transmission apparatus by using a magnetic coupling coil covering the double-wire flat spiral coil of the power transmission apparatus.

In another embodiment of the method for wireless charging an energy storage device, the magnetic coupling coil is connected to the frequency-adjustable current converter via a capacitor, thereby forming a oscillating circuit; a resonant frequency of the formed oscillating circuit is equal to a natural resonant frequency of the double-wire flat spiral coil of the power transmission apparatus.

In some embodiments of the method for wireless charging an energy storage device, the resonant coil the power reception apparatus is formed of a single wire coiled into a single-wire flat spiral, and the resonant coil the power reception apparatus is connected to the current converter via a capacitor, thereby forming an oscillating circuit; wherein a resonant frequency of the formed oscillating circuit is equal to a resonant frequency of the double-wire flat spiral coil of the power transmission apparatus.

In other embodiments of the method for wireless charging an energy storage device, the magnetic coupling coil is formed of two circular half-coils located along a periphery at opposite ends of the double-wire flat spiral coil of the power transmission apparatus; wherein the formed circular half-coils are electrically interconnected in series and consistently.

In another aspect of the present invention, there is provided a system for wireless charging an energy storage device, comprising: a power source; a power transmission apparatus connected to the power source via a frequency adjustable current converter intended to convert an electrical current from the power source to a high frequency AC current in a resonant coil of the power transmission apparatus; a power reception apparatus magnetic-resonance coupled to the power transmission apparatus to generate a high frequency electrical current in a resonant coil of the power reception apparatus; a current converter connected to the energy storage device and intended to convert the generated high frequency electrical current to electrical current required to provide operation of the energy storage device; wherein the frequency adjustable current converter is set for a frequency of a quarter-wavelength resonance of the resonant coil of the power transmission apparatus; wherein the resonant coil of the power transmission apparatus is an open-ended line formed of a pair of insulated wires coiled into a double-wire flat spiral.

According to an embodiment of the system for wireless charging an energy storage device, the resonant coil the power reception apparatus is formed of a pair of insulated wires coiled into a double-wire flat spiral; a natural resonance frequency of the double-wire flat spiral coil of the power reception apparatus is equal to a resonance frequency of the double-wire flat spiral coil of the power transmission apparatus.

According to one embodiment of the system for wireless charging an energy storage device, peripheral leads of the double-wire flat spiral coil of the power transmission apparatus are short-circuited, and the electrical energy from the frequency-adjustable current converter is supplied to the double-wire flat spiral coil of the power transmission apparatus by using a magnetic coupling coil covering the double-wire flat spiral coil of the power transmission apparatus.

According to another embodiment of the system for wireless charging an energy storage device, the magnetic coupling coil is connected to the frequency-adjustable current converter via a capacitor, thereby forming an oscillating circuit; a resonant frequency of the formed oscillating circuit is equal to a natural resonant frequency of the double-wire flat spiral coil of the power transmission apparatus.

According to some embodiments of the system for wireless charging an energy storage device, the resonant coil the power reception apparatus is formed of a single wire coiled into a single-wire flat spiral, and the resonant coil the power reception apparatus is connected to the current converter via a capacitor, thereby forming an oscillating circuit, wherein a resonant frequency of the oscillating circuit is equal to a resonant frequency of the double-wire flat spiral coil of the power transmission apparatus.

According to other embodiments of the system for wireless charging an energy storage device, the magnetic coupling coil is formed of two circular half-coils located along a periphery at opposite ends of the double-wire flat spiral coil of the power transmission apparatus, wherein the formed half-coils are electrically interconnected in series and consistently.

### DESCRIPTION OF THE DRAWINGS

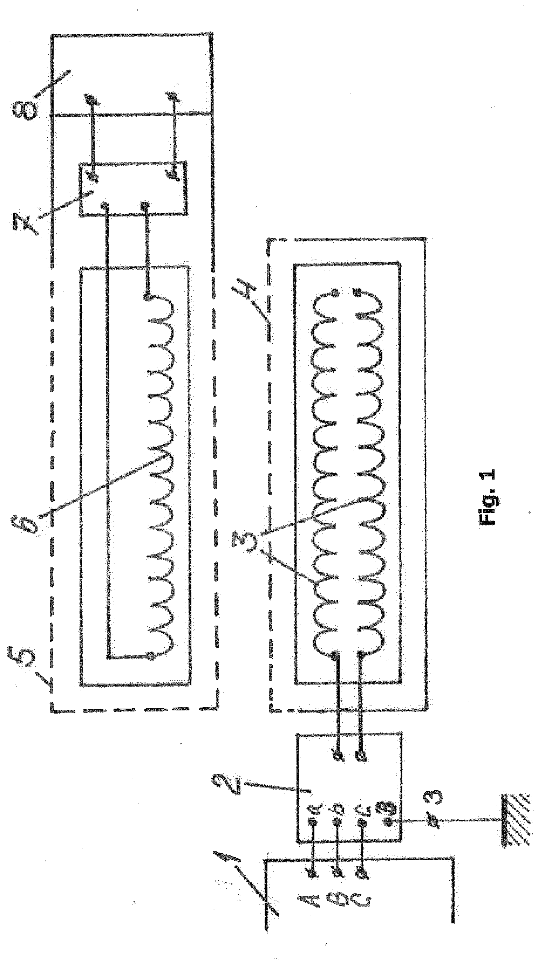

The essence of the provided methods and systems is illustrated in Fig. 1-6.
Fig. 1 shows an electrical diagram illustrating a method and a device for wireless charging an energy storage device of a stationary or mobile energy-consuming device, including: transmitting electrical energy from a power source to a power reception apparatus of the energy-consuming device, wherein a magnetic resonance coil in a power transmission apparatus is formed of a pair of wires coiled from a center to a periphery into a flat spiral; in order to excite current and potential standing waves in the coil, central leads of the double-wire flat spiral coil are insulated from each other, and periphery leads of the double-wire flat spiral coil are connected to the frequency converter.

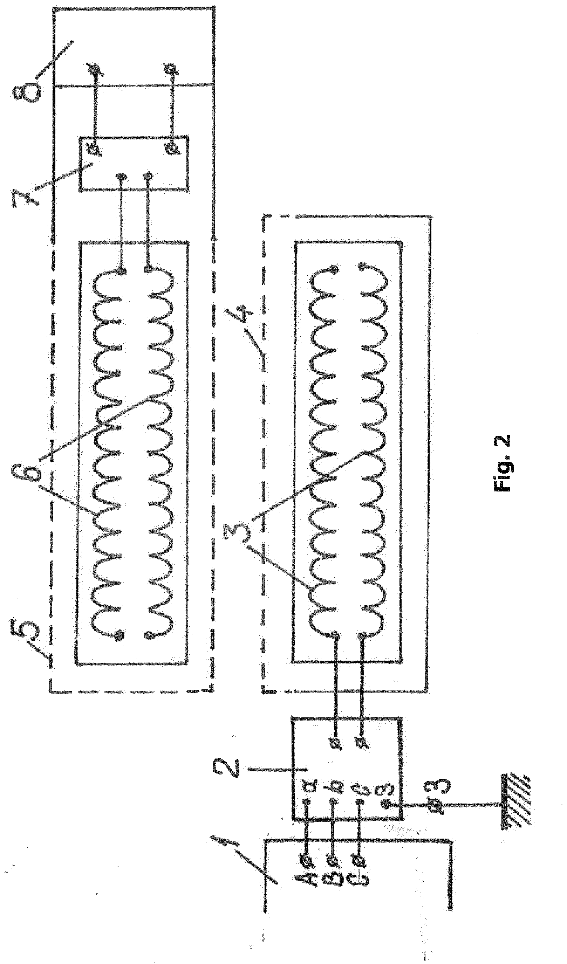

Fig. 2 shows an electrical diagram illustrating a method and a device for wireless charging an energy storage device of a stationary or mobile energy-consuming device, including: transmitting electrical energy from a power source to a power reception apparatus of the energy-consuming device, wherein a magnetic resonance coil in the power reception apparatus is formed of a pair of wires coiled from a center to a periphery into a flat spiral; in order to convert a high frequency current into a current required to provide operation of an energy storage device, central leads of the double-wire flat spiral coil are insulated from each other, and periphery leads of the coil are connected to the frequency converter.

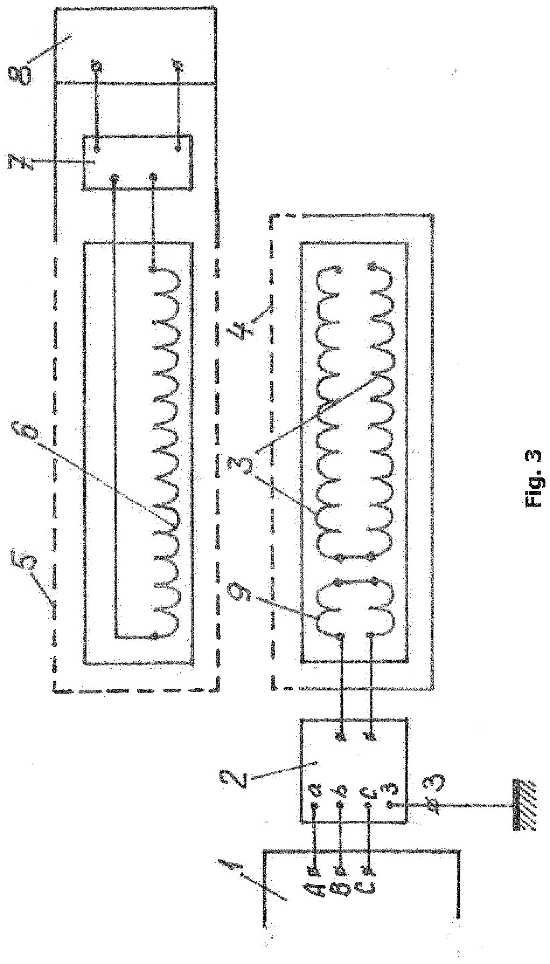

Fig. 3 shows an electrical diagram illustrating a method and a device for wireless charging an energy storage device of a stationary or mobile energy-consuming device, including: transmitting electrical energy from a power source to a power reception apparatus of the energy-consuming device, wherein peripheral leads of the double-wire flat spiral coil in a power transmission apparatus are short-circuited, and an energy is transmitted from a converter output to the double-wire flat spiral coil of the power transmission apparatus by using a magnetic coupling coil covering the double-wire flat spiral coil of the power transmission apparatus at the periphery in the coil plane.

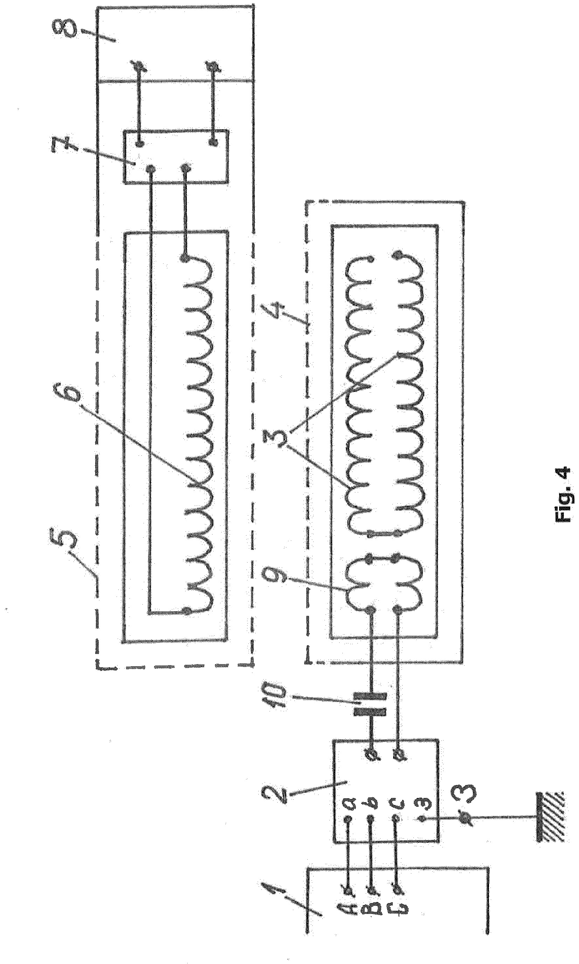

Fig. 4 shows an electrical diagram illustrating a method and a device for wireless charging an energy storage device of a stationary or mobile energy-consuming device, including: transmitting electrical energy from a power source to a power reception apparatus of the energy-consuming device, wherein a magnetic coupling coil of the double-wire flat spiral coil in a power transmission apparatus is connected to a current converter output by means of a capacitance, the capacitance in combination with the coupling coil forming a serial oscillating circuit.

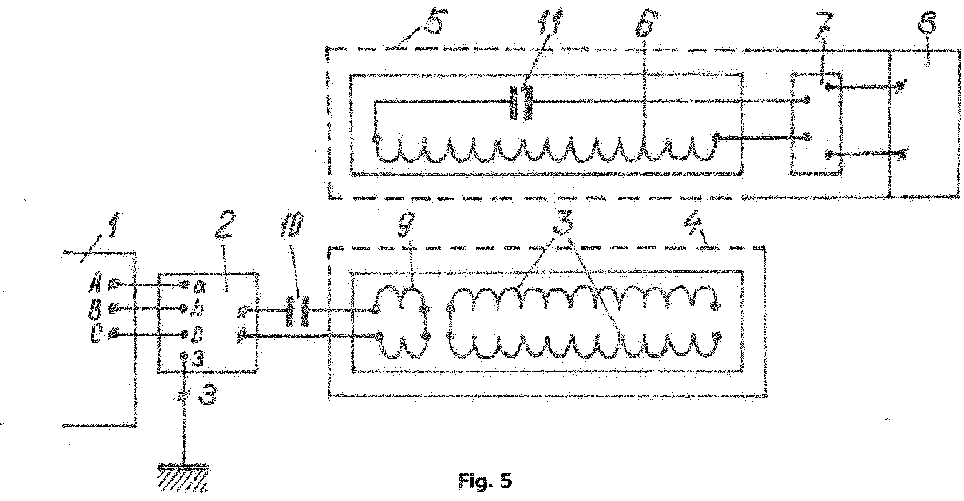

Fig. 5 shows an electrical diagram illustrating a method and a device for wireless charging an energy storage device of a stationary or mobile energy-consuming device, including: transmitting an electrical energy from a power source to a power reception apparatus of the energy-consuming device, wherein a single-wire flat spiral coil of a power reception apparatus is connected to a converter for converting a high-frequency current into a current needed to provide operation of an energy storage device in the power reception apparatus via a capacitor that forms a serial oscillating circuit with single-wire flat spiral coil of the power reception apparatus.

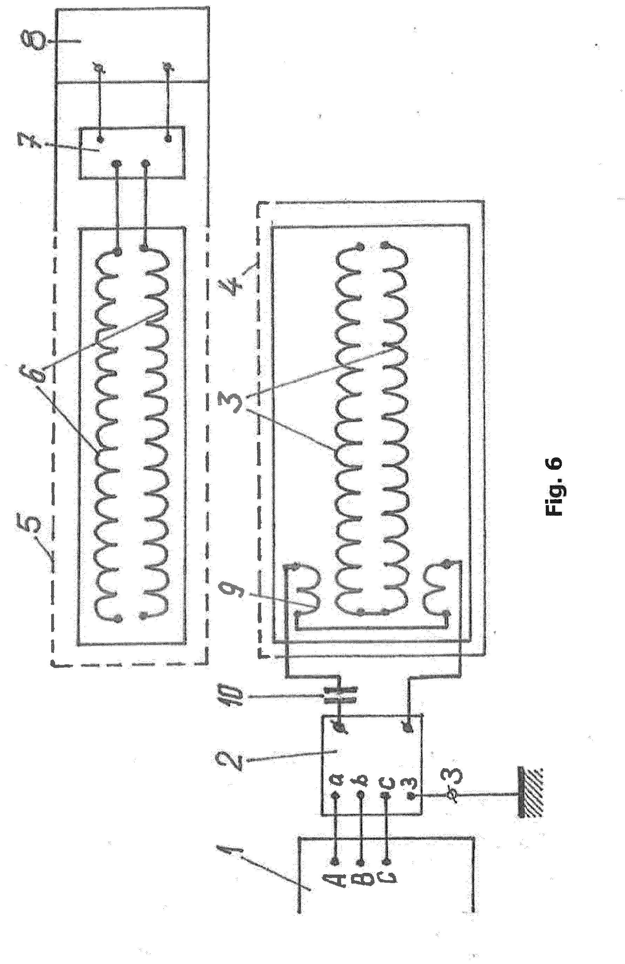

Fig. 6 shows an electrical diagram illustrating a method and a device for wireless charging an energy storage device of a stationary or mobile energy-consuming device, including: transmitting electrical energy from a power source to a power reception apparatus of the energy-consuming device, wherein a magnetic coupling coil for transmitting power from a current converter output to a double-wire flat spiral coil of a power transmission apparatus is formed of two circular half-coils located along a periphery at opposite ends of the double-wire flat spiral coil.

### DETAILED DESCRIPTION

A device comprises a power source 1, wherein a 380V/3p/50Hz to HF (1.0-30.0 kHz) single-phase current converter 2 is connected to terminals of the power source 1. An output current frequency of the converter 2 can be adjusted by an operator or automatically. Output terminals of the frequency converter 2 are connected to peripheral leads of a double-wire flat spiral coil 3. The double-wire flat spiral coil 3 has central leads insulated from each other and from other conductive parts and components of the power transmission apparatus 4. The double-wire flat spiral coil 3 as described above is formed as a long open-ended line coiled into a flat spiral, the line being powered from the frequency-adjustable frequency converter 2. If the frequency converter 2 is set for a frequency of a quarter-wavelength resonance of the coil 3, current and potential standing waves are excited along the long line 3 coiled into the double-wire flat spiral, wherein the excited standing waves have a potential antinode in a center between insulated leads and a current antinode at the peripheral leads connected to the output terminals of the frequency converter 2. A current node is formed at the open and insulated leads of the long line 3, and a potential is excited at the input peripheral leads of the long line 3. When current and potential nodes and antinodes are arranged in the double-wire flat spiral coil 3 in the above manner, a magnetic field in the double-wire flat spiral coil 3 does not decrease toward to the coil periphery due to the current antinode located at the periphery of the coil 3, thereby allowing the electromagnetic field at the periphery to effectively take part in energy transmission for a receiving electromagnetic unit 6 of a power reception apparatus 5. An energy excited in the single-wire flat spiral coil 6 is converted, via a converter 7, from high frequency current energy into energy with a current required to provide normal operation of an energy storage device 8 in the power reception apparatus 5. The single-wire flat spiral coil 6 functions as a normal non-resonant coil placed in an electromagnetic alternating field of the double-wire quarter-wavelength flat spiral coil 3 of the power transmission apparatus 4.

When leads in a central part of a spiral are insulated from each other, a double-wire flat spiral coil 6 in a power reception apparatus 5 of Fig. 2 starts operating similar to the double-wire flat spiral coil 3 in the power transmission apparatus 4, in particular as an open-ended long line formed of a pair of wires coiled into a spiral. A potential antinode is excited at a central part of the coil 6, and a current antinode is excited at a periphery of the coil 6. Therefore, an induction antinode of a magnetic flux of the coil 6 is excited at the periphery of the coil 6, thereby allowing a higher uniformity of an energy flux density over an area of the double-wire flat spiral coil 3.

When peripheral leads in a double-wire flat spiral coil 3 of the power transmission apparatus 4 as shown in Fig. 3 are connected to each other, it allows the double-wire flat spiral coil 3 to be galvanically isolated from an industrial AC mains, thereby significantly reducing a safety hazard of a charger for an operating personnel maintaining energy storage devices and for those using a charging station and a wireless charger of stationary and mobile energy-consuming devices.

As shown in Fig. 4 and Fig. 5, when capacitors 10 and 11 are connected to the transmitting and discharging circuits of the power transmission apparatus 4 and power reception apparatus 5, it creates conditions required to have a resonance occurred in series circuits supplying energy into a supply coupling coil 9 in the power transmission apparatus 4 and an energy discharging provided from the receiving single-layer spiral coil 6 in the power reception apparatus 5.

Splitting the supply coil 9 in the power transmission apparatus 4 increases the process reliability of the energy supplying to the transmitting double-wire coil 3 (see Fig. 6) due to energy supplying in a two-way manner to the coil 3, thereby facilitating thermal conditions for the coils 6 and simplifying cooling conditions of an energy supply unit supplying energy to the charger.

Examples of a method and a device for wireless charging an energy storage device of a stationary or mobile energy-consuming device are below.

### Example 1.

The transmitting coil 3 is formed of a double copper wire having a cross-section area of 0.75 mm², 90 turns. Conductors of the coil are both located in the same plane, thereby forming a double-wire Archimedean spiral. An inner diameter of the spiral coil is 100 mm, and an outer diameter is 480 mm. An inductance of each spiral is 5.1 mH. The double-wire flat spiral coil is a quarter-wavelength open-end long line coiled into a flat spiral. Line ends are insulated from each other. A capacitance between spiral wires is 30.5 nF. A resistance of conductors in the double-wire flat spiral coil is 2.3 Ω and 2.4 Ω. A resonant frequency is fo = 64-60 kHz. The coil 6 of the power reception apparatus 5 is formed as a single-wire flat spiral coil having an inner diameter of 100 mm. An inductance of the coil is 0.3 mH. Electrical energy with a power of 100 W and maximum dissipation of 7% is supplied to a distance of 0.5 m in a vertical direction between coils of the power transmission apparatus 3 and the power reception apparatus 6 when moving in two mutually transversal directions in a horizontal plane (±0.3 m from the center).

### Example 2.

Under the conditions of energy transmission according to Example 1, energy is supplied to the coil 3 by means of the supply coil 9. The supply coil 9 is formed of a copper wire having a cross section area of 2.5 mm², 3 turns. An inductance of the coil 9 is 18.5 µH. The coil 9 is connected to the output of the frequency converter 2 via the series electrical capacitor 10. A capacitance of the capacitor 10 is 180 nF. The leads of the coil 3 are short-circuited. Peripheral measurements of transmitted power dissipation under the same test conditions according to Example 1 have exhibited similar results for dissipation at a deviation of the receiving coil from a center by ±0.3 m, i.e. no more than 7%.

Under the conditions of energy transmission according to Example 1 and Example 2, energy with a power of 100 W is transmitted to a distance of 1.0 m. A maximum dissipation is 10%.

Thus, energy transmission tests for distances of 0.5 m and 1.0 m have proved that the irregularity of an electromagnetic field intensity for low-power gadgets, such as mobile phones, laptops, tablet, PCs, and etc. at an area of about 0.3 m² is no more than 10%. In this case, an average electromagnetic energy flux intensity is about 0.3 kW/m².

### Example 3

The transmitting supply coil 3 is formed of a double copper multi-conductor wire PVMTg-40 with a cross section area of 0.25 mm², and an insulation strength is 40 kV DC, and an outer diameter in the insulation is 4.2 mm. The coil is formed as a flat rectangular spiral with outer dimensions of 2.5 m x 1.0 m. A number of double turns is 150. Inner leads of the coil are insulated from each other. Outer leads are connected to the supply frequency converter. A supply current frequency is 11 kHz. An inductance of each path of the double-wire coil is 6.2 mH. A DC resistance of each path is 11 Ω. A coil of the power reception apparatus is formed of a copper multi-core wire with a cross section area of 16 mm². The power reception apparatus coil has dimensions of 1.4 m x 0.5 m. A number of turns is 25. An inductance is 1.2 mH. A DC resistance is 0.16 Ω. A distance between coils of the power transmission apparatus and power reception apparatus is 0.3 m, and the transmitted power is 2.0 kW.

A maximum power irregularity in case of deviation from a central position in any of the four sides by 0.5 m is 10%. An average electromagnetic energy flux intensity is about 3.0 kW/m².

Thus, the electrical energy flux irregularity tests for transmission to a distance of 0.3 m at power of 2.0 kW by displacing the power reception apparatus coil by ±0.5 m (half width of the transmitting coil) has proved that power deviations do not exceed 10%.

The device according to Example 3 can be used for charging batteries of mobile gadgets such as cars, electric carts or quadcopters, without any strict requirements for mutual positioning of the charger and the serviced unit or gadget; several gadgets can be serviced simultaneously in parallel. The present invention allows energy storage devices of a stationary or mobile energy-consuming device to be wirelessly charged, i.e. it allows charging and recharging of energy storage devices in vehicles during movement or at special wireless charging stations when a mobile energy-consuming device is at a road crossing with traffic lights, etc., and charging and recharging energy storage devices in mobile phones, laptops, tablet PCs in large rooms, and charging and recharging energy storage devices in quadcopters, automated logistical systems of cargo movement at large warehouses and bases and storage devices under operating conditions of automated systems where presence of people is undesirable (warehouses with very low operating temperatures, warehouses with a special composition of an ambient environment, etc.).

## Claims

1. A method for wireless charging an energy storage device (8), comprising:
transmitting electrical energy from a power source (1) to a power reception apparatus (5) by using a power transmission apparatus (4) magnetic-resonance coupled to the power reception apparatus (5);
wherein the power transmission apparatus (4) is further connected to the power source (1) via a frequency-adjustable current converter (2) adapted to convert an electrical current from the power source (1) to a high frequency AC current in a resonant coil (3) of the power transmission apparatus (4), thereby generating a high frequency electrical current in a resonant coil (6) of the power reception apparatus (5); and
converting, by means of a current converter (7) connected to the energy storage device (8), the generated high frequency electrical current to electrical current required to provide operation of the energy storage device (8);
wherein the frequency adjustable current converter (2) is set for a frequency of a quarter-wavelength resonance of the resonant coil (3) of the power transmission apparatus (4);
wherein the resonant coil (3) of the power transmission apparatus (4) is an open-ended quarter-wavelength line formed of a pair of insulated wires coiled into a double-wire flat spiral.

2. The method according to claim 1, wherein the resonant coil (6) of the power reception apparatus (5) is formed of a pair of insulated wires coiled into a double-wire flat spiral; a natural resonance frequency of the double-wire flat spiral coil (6) of the power reception apparatus (5) is equal to a resonant frequency of the double-wire flat spiral coil (3) of the power transmission apparatus (4).

3. The method according to claim 2, wherein peripheral leads of the double-wire flat spiral coil (3) of the power transmission apparatus (4) are short-circuited, and the electrical energy from the frequency-adjustable current converter (2) is supplied to the double-wire flat spiral coil (3) of the power transmission apparatus (4) by using a magnetic coupling coil (9) covering the double-wire flat spiral coil (3) of the power transmission apparatus (4).

4. The method according to claim 3, wherein the magnetic coupling coil (9) is connected to the frequency-adjustable current converter (2) via a capacitor (10), thereby forming a oscillating circuit; a resonant frequency of the formed oscillating circuit is equal to a natural resonant frequency of the double-wire flat spiral coil (3) of the power transmission apparatus (4).

5. The method according to claim 1, wherein the resonant coil (6) of the power reception apparatus (5) is formed of a single wire coiled into a single-wire flat spiral, and the resonant coil (6) of the power reception apparatus (5) is connected to the current converter (7) via a capacitor (11), thereby forming an oscillating circuit; wherein a resonant frequency of the formed oscillating circuit is equal to a resonant frequency of the double-wire flat spiral coil (3) of the power transmission apparatus (4).

6. The method according to any of claims 3-4, wherein the magnetic coupling coil (9) is formed of two circular half-coils located along a periphery at opposite ends of the double-wire flat spiral coil (3) of the power transmission apparatus (4); wherein the formed circular half-coils are electrically interconnected in series and consistently.

7. A system for wireless charging an energy storage device (8), comprising:
a power source (1);
a power transmission apparatus (4); and
a power reception apparatus (5) magnetic-resonance coupled to the power transmission apparatus (4);
wherein the power transmission apparatus (4) is connected to the power source (1) via a frequency adjustable current converter (2) adapted to convert an electrical current from the power source (1) to a high frequency AC current in a resonant coil (3) of the power transmission apparatus (4), thereby generating a high frequency electrical current in a resonant coil (6) of the power reception apparatus (5);
a current converter (7) connected to the energy storage device (8) and adapted to convert the generated high frequency electrical current to electrical current required to provide operation of the energy storage device (8);
wherein the frequency adjustable current converter (2) is set for a frequency of a quarter-wavelength resonance of the resonant coil (3) of the power transmission apparatus (4);
wherein the resonant coil (3) of the power transmission apparatus (4) is an open-ended line formed of a pair of insulated wires coiled into a double-wire flat spiral.

8. The system according to claim 7, wherein the resonant coil (6) of the power reception apparatus (5) is formed of a pair of insulated wires coiled into a double-wire flat spiral; a natural resonance frequency of the double-wire flat spiral coil (6) of the power reception apparatus (5) is equal to a resonance frequency of the double-wire flat spiral coil (3) of the power transmission apparatus (4).

9. The system according to claim 8, wherein peripheral leads of the double-wire flat spiral coil (3) of the power transmission apparatus (4) are short-circuited, and the electrical energy from the frequency-adjustable current converter (2) is supplied to the double-wire flat spiral coil (3) of the power transmission apparatus (4) by using a magnetic coupling coil (9) covering the double-wire flat spiral coil (3) of the power transmission apparatus (4).

10. The system according to claim 9, wherein the magnetic coupling coil (9) is connected to the frequency-adjustable current converter (2) via a capacitor (10), thereby forming an oscillating circuit; a resonant frequency of the formed oscillating circuit is equal to a natural resonant frequency of the double-wire flat spiral coil (3) of the power transmission apparatus (4).

11. The system according to claim 7, wherein the resonant coil (6) of the power reception apparatus (5) is formed of a single wire coiled into a single-wire flat spiral, and the resonant coil (6) of the power reception apparatus (5) is connected to the current converter (7) via a capacitor (11), thereby forming an oscillating circuit, wherein a resonant frequency of the oscillating circuit is equal to a resonant frequency of the double-wire flat spiral coil (3) of the power transmission apparatus (4).

12. The system according to any of claims 9-10, wherein the magnetic coupling coil (9) is formed of two circular half-coils located along a periphery at opposite ends of the double-wire flat spiral coil (3) of the power transmission apparatus (4), wherein the formed half-coils are electrically interconnected in series and consistently.

## Patentansprüche

1. Verfahren zum drahtlosen Laden einer Energiespeichervorrichtung (8), umfassend:
Übertragen von elektrischer Energie von einer Leistungsquelle (1) zu einer Leistungsempfangsvorrichtung (5) unter Verwendung einer mit der Leistungsempfangsvorrichtung (5) magnetischresonanzgekoppelten Leistungsübertragungsvorrichtung (4);
wobei die Leistungsübertragungsvorrichtung (4) ferner mit der Leistungsquelle (1) über einen frequenzeinstellbaren Stromwandler (2) verbunden ist, der angepasst ist, um einen elektrischen Strom von der Leistungsquelle (1) in einen hochfrequenten Wechselstrom in einer Resonanzspule (3) der Leistungsübertragungsvorrichtung (4) umzuwandeln, wodurch ein hochfrequenter elektrischer Strom in einer Resonanzspule (6) der Leistungsempfangsvorrichtung (5) erzeugt wird; und
Umwandeln des erzeugten hochfrequenten elektrischen Stroms mittels eines an die Energiespeichervorrichtung (8) angeschlossenen Stromwandlers (7) in elektrischen Strom, der zum Bereitstellen des Betriebs der Energiespeichervorrichtung (8) erforderlich ist;
wobei der frequenzeinstellbare Stromwandler (2) auf eine Frequenz einer Viertelwellenlängenresonanz der Resonanzspule (3) der Leistungsübertragungsvorrichtung (4) eingestellt ist;
wobei die Resonanzspule (3) der Leistungsübertragungsvorrichtung (4) eine offene Viertelwellenlängenleitung ist, die aus einem Paar isolierter Drähte gebildet ist, die zu einer Doppeldraht-Flachspirale gewickelt sind.

2. Verfahren nach Anspruch 1, wobei die Resonanzspule (6) der Leistungsempfangsvorrichtung (5) aus einem Paar isolierter Drähte gebildet ist, die zu einer Doppeldraht-Flachspirale gewickelt sind; eine Eigenresonanzfrequenz der Doppeldraht-Flachspiralspule (6) der Leistungsempfangsvorrichtung (5) gleich einer Resonanzfrequenz der Doppeldraht-Flachspiralspule (3) der Leistungsübertragungsvorrichtung (4) ist.

3. Verfahren nach Anspruch 2, wobei periphere Leitungen der Doppeldraht-Flachspiralspule (3) der Leistungsübertragungsvorrichtung (4) kurzgeschlossen werden und unter Verwendung einer die Doppeldraht-Flachspiralspule (3) der Leistungsübertragungsvorrichtung (4) abdeckenden magnetischen Koppelspule (9) der Doppeldraht-Flachspiralspule (3) der Leistungsübertragungsvorrichtung (4) die elektrische Energie aus dem frequenzeinstellbaren Stromwandler (2) zugeführt wird.

4. Verfahren nach Anspruch 3, wobei die magnetische Koppelspule (9) über einen Kondensator (10) mit dem frequenzeinstellbaren Stromwandler (2) verbunden ist, wodurch ein Schwingkreis gebildet wird; eine Resonanzfrequenz des gebildeten Schwingkreises gleich einer Eigenresonanzfrequenz der Doppeldraht-Flachspiralspule (3) der Leistungsübertragungsvorrichtung (4) ist.

5. Verfahren nach Anspruch 1, wobei die Resonanzspule (6) der Leistungsempfangsvorrichtung (5) aus einem zu einer Eindraht-Flachspirale gewickelten Einzeldraht gebildet ist, und die Resonanzspule (6) der Leistungsempfangsvorrichtung (5) über einen Kondensator (11) mit dem Stromwandler (7) verbunden ist, wodurch ein Schwingkreis gebildet wird; wobei eine Resonanzfrequenz des gebildeten Schwingkreises gleich einer Resonanzfrequenz der Doppeldraht-Flachspiralspule (3) der Leistungsübertragungsvorrichtung (4) ist.

6. Verfahren nach einem der Ansprüche 3 bis 4, wobei die magnetische Kopplungsspule (9) aus zwei kreisförmigen Halbspulen gebildet ist, die entlang eines Umfangs an gegenüberliegenden Enden der Doppeldraht-Flachspiralspule (3) der Leistungsübertragungsvorrichtung (4) angeordnet sind; wobei die gebildeten kreisförmigen Halbspulen elektrisch in Reihe und durchgängig miteinander verbunden sind.

7. System zum drahtlosen Laden einer Energiespeichervorrichtung (8), umfassend:
eine Leistungsquelle (1);
eine Leistungsübertragungsvorrichtung (4); und
eine Leistungsempfangsvorrichtung (5), die mit der Leistungsübertragungsvorrichtung (4) magnetresonanzgekoppelt ist;
wobei die Leistungsübertragungsvorrichtung (4) mit der Leistungsquelle (1) über einen frequenzeinstellbaren Stromwandler (2) verbunden ist, der angepasst ist, um einen elektrischen Strom von der Leistungsquelle (1) in einen hochfrequenten Wechselstrom in einer Resonanzspule (3) der Leistungsübertragungsvorrichtung (4) umzuwandeln, wodurch ein hochfrequenter elektrischer Strom in einer Resonanzspule (6) der Leistungsempfangsvorrichtung (5) erzeugt wird;
ein Stromwandler (7), der mit der Energiespeichervorrichtung (8) verbunden und angepasst ist, um den erzeugten hochfrequenten elektrischen Strom in elektrischen Strom umzuwandeln, der erforderlich ist, um den Betrieb der Energiespeichervorrichtung (8) bereitzustellen;
wobei der frequenzeinstellbare Stromwandler (2) auf eine Frequenz einer Viertelwellenlängenresonanz der Resonanzspule (3) der Leistungsübertragungsvorrichtung (4) eingestellt ist;
wobei die Resonanzspule (3) der Leistungsübertragungsvorrichtung (4) eine offene Leitung ist, die aus einem Paar isolierter Drähte gebildet ist, die zu einer Doppeldraht-Flachspirale gewickelt sind.

8. System nach Anspruch 7, wobei die Resonanzspule (6) der Leistungsempfangsvorrichtung (5) aus einem Paar isolierter Drähte gebildet ist, die zu einer Doppeldraht-Flachspirale gewickelt sind; eine Eigenresonanzfrequenz der Doppeldraht-Flachspiralspule (6) der Leistungsempfangsvorrichtung (5) gleich einer Resonanzfrequenz der Doppeldraht-Flachspiralspule (3) der Leistungsübertragungsvorrichtung (4) ist.

9. System nach Anspruch 8, wobei periphere Leitungen der Doppeldraht-Flachspiralspule (3) der Leistungsübertragungsvorrichtung (4) kurzgeschlossen werden und unter Verwendung einer die Doppeldraht-Flachspiralspule (3) der Leistungsübertragungsvorrichtung (4) abdeckenden magnetischen Koppelspule (9) der Doppeldraht-Flachspiralspule (3) der Leistungsübertragungsvorrichtung (4) die elektrische Energie aus dem frequenzeinstellbaren Stromwandler (2) zugeführt wird.

10. System nach Anspruch 9, wobei die magnetische Koppelspule (9) über einen Kondensator (10) mit dem frequenzeinstellbaren Stromwandler (2) verbunden ist, wodurch ein Schwingkreis gebildet wird; eine Resonanzfrequenz des gebildeten Schwingkreises gleich einer Eigenresonanzfrequenz der Doppeldraht-Flachspiralspule (3) der Leistungsübertragungsvorrichtung (4) ist.

11. System nach Anspruch 7, wobei die Resonanzspule (6) der Leistungsempfangsvorrichtung (5) aus einem zu einer Eindraht-Flachspirale gewickelten Einzeldraht gebildet ist, und die Resonanzspule (6) der Leistungsempfangsvorrichtung (5) über einen Kondensator (11) mit dem Stromwandler (7) verbunden ist, wodurch ein Schwingkreis gebildet wird, wobei eine Resonanzfrequenz des Schwingkreises gleich einer Resonanzfrequenz der Doppeldraht-Flachspiralspule (3) der Leistungsübertragungsvorrichtung (4) ist.

12. System nach einem der Ansprüche 9-10, wobei die magnetische Kopplungsspule (9) aus zwei kreisförmigen Halbspulen gebildet ist, die entlang eines Umfangs an gegenüberliegenden Enden der Doppeldraht-Flachspiralspule (3) der Leistungsübertragungsvorrichtung (4) angeordnet sind, wobei die gebildeten Halbspulen elektrisch in Reihe und durchgängig miteinander verbunden sind.

## Revendications

1. Procédé de charge sans fil d'un dispositif de stockage d'énergie (8), comprenant :
la transmission de puissance électrique d'une source de puissance (1) à un appareil de réception de puissance (5) en utilisant un appareil de transmission de puissance (4) couplé par résonance magnétique à l'appareil de réception de puissance (5) ;
dans lequel l'appareil de transmission de puissance (4) est en outre connecté à la source de puissance (1) par l'intermédiaire d'un convertisseur de courant réglable en fréquence (2) conçu pour convertir un courant électrique provenant de la source de puissance (1) en un courant alternatif haute fréquence dans une bobine résonante (3) de l'appareil de transmission de puissance (4), générant ainsi un courant électrique haute fréquence dans une bobine résonante (6) de l'appareil de réception de puissance (5) ; et
la conversion, au moyen d'un convertisseur de courant (7) connecté au dispositif de stockage d'énergie (8), du courant électrique haute fréquence généré en courant électrique requis pour assurer le fonctionnement du dispositif de stockage d'énergie (8) ;
dans lequel le convertisseur de courant réglable en fréquence (2) est réglé pour une fréquence d'une résonance d'un quart de longueur d'onde de la bobine résonante (3) de l'appareil de transmission de puissance (4) ;
dans lequel la bobine résonante (3) de l'appareil de transmission de puissance (4) est une ligne d'un quart de longueur d'onde à extrémité ouverte formée d'une paire de fils isolés enroulés en une spirale plate à double fil.

2. Procédé selon la revendication 1, dans lequel la bobine résonante (6) de l'appareil de réception de puissance (5) est formée d'une paire de fils isolés enroulés en une spirale plate à double fil ; une fréquence de résonance naturelle de la bobine en spirale plate à double fil (6) de l'appareil de réception de puissance (5) est égale à une fréquence de résonance de la bobine en spirale plate à double fil (3) de l'appareil de transmission de puissance (4).

3. Procédé selon la revendication 2, dans lequel des fils périphériques de la bobine en spirale plate à double fil (3) de l'appareil de transmission de puissance (4) sont court-circuités, et l'énergie électrique provenant du convertisseur de courant réglable en fréquence (2) est fournie à la bobine en spirale plate à double fil (3) de l'appareil de transmission de puissance (4) en utilisant une bobine de couplage magnétique (9) recouvrant la bobine en spirale plate à double fil (3) de l'appareil de transmission de puissance (4).

4. Procédé selon la revendication 3, dans lequel la bobine de couplage magnétique (9) est connectée au convertisseur de courant réglable en fréquence (2) par l'intermédiaire d'un condensateur (10), formant ainsi un circuit oscillant ; une fréquence de résonance du circuit oscillant formé est égale à une fréquence de résonance naturelle de la bobine en spirale plate à double fil (3) de l'appareil de transmission de puissance (4).

5. Procédé selon la revendication 1, dans lequel la bobine résonante (6) de l'appareil de réception de puissance (5) est formée d'un fil unique enroulé en une spirale plate à fil unique, et la bobine résonante (6) de l'appareil de réception de puissance (5) est connectée au convertisseur de courant (7) par l'intermédiaire d'un condensateur (11), formant ainsi un circuit oscillant ; dans lequel une fréquence de résonance du circuit oscillant formé est égale à une fréquence de résonance de la bobine en spirale plate à double fil (3) de l'appareil de transmission de puissance (4).

6. Procédé selon l'une quelconque des revendications 3-4, dans lequel la bobine de couplage magnétique (9) est formée de deux demi-bobines circulaires situées le long d'une périphérie à des extrémités opposées de la bobine en spirale plate à double fil (3) de l'appareil de transmission de puissance (4) ; dans lequel les demi-bobines circulaires formées sont électriquement interconnectées en série et de manière cohérente.

7. Système de charge sans fil d'un dispositif de stockage d'énergie (8), comprenant :
une source de puissance (l) ;
un appareil de transmission de puissance (4) ; et
un appareil de réception de puissance (5) couplé par résonance magnétique à l'appareil de transmission de puissance (4) ;
dans lequel l'appareil de transmission de puissance (4) est connecté à la source de puissance (1) par l'intermédiaire d'un convertisseur de courant réglable en fréquence (2) conçu pour convertir un courant électrique provenant de la source de puissance (1) en un courant alternatif haute fréquence dans une bobine résonante (3) de l'appareil de transmission de puissance (4), générant ainsi un courant électrique haute fréquence dans une bobine résonnante (6) de l'appareil de réception de puissance (5) ;
un convertisseur de courant (7) connecté au dispositif de stockage d'énergie (8) et conçu pour convertir le courant électrique haute fréquence généré en courant électrique requis pour assurer le fonctionnement du dispositif de stockage d'énergie (8) ;
dans lequel le convertisseur de courant réglable en fréquence (2) est réglé pour une fréquence d'une résonance d'un quart de longueur d'onde de la bobine résonante (3) de l'appareil de transmission de puissance (4) ;
dans lequel la bobine résonante (3) de l'appareil de transmission de puissance (4) est une ligne à extrémité ouverte formée d'une paire de fils isolés enroulés en une spirale plate à double fil.

8. Système selon la revendication 7, dans lequel la bobine résonante (6) de l'appareil de réception de puissance (5) est formée d'une paire de fils isolés enroulés en une spirale plate à double fil ; une fréquence de résonance naturelle de la bobine en spirale plate à double fil (6) de l'appareil de réception de puissance (5) est égale à une fréquence de résonance de la bobine en spirale plate à double fil (3) de l'appareil de transmission de puissance (4).

9. Système selon la revendication 8, dans lequel les fils périphériques de la bobine en spirale plate à double fil (3) de l'appareil de transmission de puissance (4) sont court-circuités, et l'énergie électrique provenant du convertisseur de courant réglable en fréquence (2) est fournie à la bobine en spirale plate à double fil (3) de l'appareil de transmission de puissance (4) en utilisant une bobine de couplage magnétique (9) recouvrant la bobine en spirale plate à double fil (3) de l'appareil de transmission de puissance (4).

10. Système selon la revendication 9, dans lequel la bobine de couplage magnétique (9) est connectée au convertisseur de courant réglable en fréquence (2) par l'intermédiaire d'un condensateur (10), formant ainsi un circuit oscillant ; une fréquence de résonance du circuit oscillant formé est égale à une fréquence de résonance naturelle de la bobine en spirale plate à double fil (3) de l'appareil de transmission de puissance (4).

11. Système selon la revendication 7, dans lequel la bobine résonante (6) de l'appareil de réception de puissance (5) est formée d'un fil unique enroulé en une spirale plate à fil unique, et la bobine résonante (6) de l'appareil de réception de puissance (5) est connectée au convertisseur de courant (7) par l'intermédiaire d'un condensateur (11), formant ainsi un circuit oscillant, dans lequel une fréquence de résonance du circuit oscillant est égale à une fréquence de résonance de la bobine en spirale plate à double fil (3) de l'appareil de transmission de puissance (4).

12. Système selon l'une quelconque des revendications 9-10, dans lequel la bobine de couplage magnétique (9) est formée de deux demi-bobines circulaires situées le long d'une périphérie à des extrémités opposées de la bobine en spirale plate à double fil (3) de l'appareil de transmission de puissance (4), dans lequel les demi-bobines formées sont électriquement interconnectées en série et de manière cohérente.
